# EUROPÄISCHE PATENTSCHRIFT

(11) **EP 1 543 906 B1**
(45) Veröffentlichungstag und Bekanntmachung des Hinweises auf die Patenterteilung: **09.07.2008**
(21) Anmeldenummer: 04029830.9
(22) Anmeldetag: 16.12.2004
(51) Int. Cl.: B23C 3/12

(54) **Bearbeitungseinheit und Verfahren zum Bearbeiten der Eckverbindungen von aus Profilstücken geschweissten Rahmen**
Machining unit and method for treatment of corner joints of frames of welded profiles
Unité d'usinage et procédé pour le traitement des joints d'angle de cadres en profilés soudés

(30) Priorität: 16.12.2003 DE 20319515 U; 16.08.2004 DE 202004012786 U
(43) Veröffentlichungstag der Anmeldung: 22.06.2005
(60) Teilanmeldung: 07023805.0
(73) Patentinhaber: Urban GmbH & Co. Maschinenbau KG, D-87700 Memmingen (DE)
(72) Erfinder: Jägg, Josef, 88450 Berkheim (DE)
(74) Vertreter: Pfister, Stefan Helmut Ulrich

(56) Entgegenhaltungen:
- EP-A- 0 705 659
- DE-A1- 3 539 670
- DE-U1- 9 016 150

## Beschreibung

Die Erfindung betrifft eine Eckverputzvorrichtung für die Bearbeitung der Verbindung von aus Profilstücken geschweißten Rahmen bzw. Rahmenteilen, insbesondere für Fenster- oder Türrahmen. Die Vorrichtung ist senkrecht zu der definierten Rahmenebene sowie entlang des Verbindungsbereichs bewegbar und weist an einem Halter ein Bearbeitungswerkzeug auf, welches zwischen zwei Tastern angeordnet ist. Die Taster liegen dabei zumindest an je einem Profilstück des Rahmens bzw. Türrahmens an.

Aus der deutschen Offenlegungsschrift DE 35 39 670 A1 ist eine Vorrichtung zum Abstechen des Schweißgrates an Fenster- oder Türrahmen bekannt. Diese Vorrichtung nach dem Stand der Technik zeichnet sich dadurch aus, dass ein Anschlagkörper am Messerhalter längsbeweglich geführt und in Bewegungsrichtung federnd am Schlitten abgestützt ist, dass der Anschlagkörper mindestens eine Anschlagfläche aufweist, die beim Schlittenvorschub am Fenster- oder Türrahmen zur Anlage kommt und dass mit dem Anschlagkörper mindestens ein seitlich neben dem Abstechmesser angeordneter und gegenüber dessen Messerspitze versetzter Taster verbunden ist.

Gattungsgemäße Eckverputzvorrichtungen sind zum Beispiel auch aus der europäischen Patentschrift 705 659 bekannt.

Dort wird vorgeschlagen, daß die Verlängerung der Tastflanken der Taster v-förmig aufeinanderzulaufen und die Schneiden des Bearbeitungswerkzeuges, eines Abstech- oder Abziehmessers, einschließen.

Die Tastflanken beziehungsweise die Taster sind letztendlich starr mit dem Bearbeitungswerkzeug verbunden. Die Taster tasten den jeweils zu bearbeitenden Bereich ab, der dann vom Bearbeitungswerkzeug derart bearbeitet wird, daß ein entsprechender Span im Verbindungsbereich, insbesondere im Schweißbereich, wo ein unansehlicher Schweißwulst entsteht, abgehoben wird.

Die V-förmig angeordneten Taster erlauben es, daß das Messer ausreichend an den schräg verlaufenden Konturen des Profiles abgestützt ist.

Nun kann es sich ergeben, daß das Profil, aus welchen der Rahmen beziehungsweise das Rahmenteil gefertigt ist, im Wesentlichen horizontal verlaufende Konturabschnitte aufweist, wodurch es unmöglich ist, daß diese Taster nach dem Stand der Technik eine Führung für das Werkzeug ergeben. Ist aber das Bearbeitungswerkzeug nicht geführt, besteht die erhebliche Gefahr, daß das Werkzeug unbeabsichtigte Bewegungen in Rahmenebene beziehungsweise senkrecht hierzu ausführt, was unweigerlich zu entsprechenden Fehlbearbeitungen oder gar Beschädigungen des Rahmens beziehungsweise des Rahmenteiles führen muß.

Es ist daher Aufgabe der vorliegenden Erfindung, ausgehend von dem vorgeschilderten Stand der Technik, eine Eckverputzvorrichtung vorzuschlagen, bei der unabhängig von der konkreten Profilausgestaltung immer ein gutes Bearbeitungsergebnis erreicht wird unter Vermeidung von der Bildung von Ausschuß durch Fehlbearbeitungen.

Die Aufgabe der Erfindung wird gelöst durch eine Eckverputzvorrichtung nach dem Anspruch 1, sowie durch ein Verfahren zur Bearbeitung von aus Profilstückchen gebildeten Rahmen oder Rahmenteilen nach Anspruch 27.

Diese Aufgabe der Erfindung wird demnach durch eine Eckverputzvorrichtung für die Bearbeitung der Verbindung aus Profilstücken geschweißten Rahmen bzw. Rahmenteilen insbesondere für Fenster- oder Türrahmen gelöst, wobei die Eckverputzvorrichtung zumindest in Richtung senkrecht zu der von dem Profilstücken definierten Rahmenebene sowie entlang dem Verbindungsbereich bewegbar ist, wobei an einem Halter zwischen zwei Tastern ein Bearbeitungswerkzeug angeordnet ist und die beiden Taster zumindest zeitweise je an einemProfilstück anliegen, und wobei zumindest zeitweise der Taster bezüglich dem Halter beweglich ist, die sich dadurch auszeichnet, dass die Taster auf einer Führungsstange beweglich geführt und in einer Tasterlagerung gelagert sind, seitlich neben dem Bearbeitungswerkzeug Gleitflächen vorgesehen sind, die Gleitflächen bezüglich der Schneide zurückgesetzt und durch eine gebrochene Kante oder eine Fase angegeben sind.

Durch die erfindungsgemäße Ausgestaltung wird erreicht, daß sich der Taster an dem Halter entsprechend den Gegebenheiten der Profilanordnung auszurichten vermag. Zwar ist die ungefähre Lage der Ecke der verschweißten Profilstücke bekannt, dies ergibt sich zum Beispiel durch die Befestigungsanschläge für die Profilstücke, doch manchmal können hier gewisse Maßtoleranzen auftreten, die, wenn kein entsprechender Ausgleich wie nach der Erfindung vorgesehen ist, zu Fehlbearbeitungen oder sogar zu Ausschuß führen können. Durch die bewegliche Anordnung des Tasters bezüglich des Halters, insbesondere vor der eigentlichen Bearbeitung, richtet sich die Eckverputzvorrichtung selbstständig aus. Dabei ist natürlich die Anordnung des Bearbeitungswerkzeuges zwischen den Tastern so gewählt, wie es auf dem verschweißten Rahmen bzw. Rahmenteil ist. Da die Gehrungsfläche im Verbindungsbereich entsprechend zu bearbeiten ist, ist bekannt, daß die Gehrung auf der Winkelhalbierende des Winkels der aneinanderstoßenden Profilstücke ist. Andersherum gesprochen sind die miteinander verbundenen Profilstücke symmetrisch bezüglich der Gehrungsfläche angeordnet. Der zu bearbeitende Verbindungsbereich befindet sich nun an der Gehrung und auf der Mittelebene. Zwischen den beiden Tastern befinden sich folgerichtig die schneidwirksamen bzw. spanabhebenden Flächen des Bearbeitungswerkzeuges.

Der erfindungsgemäße Vorschlag ist sehr vielfältig einsetzbar und realisierbar.

Bei einer bevorzugten Variante der Erfindung wird vorgeschlagen, daß das Bearbeitungswerkzeug bezüglich dem Taster beweglich ist.

Durch diese erfindungsgemäße Variante wird erreicht, daß das Bearbeitungswerkzeug exakt an der Gehrungsfläche anliegt, da diese Position dann erreicht ist, wenn die beiden Taster je an den verschweißten Profilstücken anliegen. Die Taster verbleiben in dieser Position, während das Spanmesser den Schweißwulst im Gehrungsbereich abarbeitet. Das bedeutet, daß das Spanmesser aufgrund des Vortriebes in Richtung der Gehrungsfläche beziehungsweise des Verbindungsbereiches wirksam ist und sich das Spanmesser gegenüber den an den Profilstücken anliegenden Tastern bewegt. Das Messer bzw. das Bearbeitungswerkzeug bleibt durch die dauerhafte Anlage der Taster in der exakt richtige Position, nämlich im Gehrungsbereich. Die verschiedenen Höhenlagen, also die vertikalen Positionen, werden durch die entsprechende Beweglichkeit der Eckverputzvorrichtung entsprechend dem Profilverlauf erreicht.

Bei einer weiteren erfindungsgemäßen Variante wird vorgesehen, daß der Taster und das Bearbeitungswerkzeug eine Bewegungseinheit bilden und gemeinsam bezüglich dem Halter beweglich sind. Zunächst schließt diese Variante nicht aus, daß nicht auch in dieser Bewegungseinheit Taster und Bearbeitungswerkzeug zueinander beweglich ausgebildet sind. Dies kann durch entsprechende Bremsen oder Kupplungen eingestellt sein. Günstig ist diese Anordnung aber insbesondere vor dem Hintergrund, daß diese Bewegungseinheit genau die gleiche geometrische Anordnung aufweist, wie der Verbindungsbereich, das heißt, die Taster bzw. deren Tastflächen sind in dem Winkel angeordnet, wie die Profilstücke zueinander orientiert sind und die Mittelebene der Taster trägt das Bearbeitungswerkzeug, das auf dem Verbindungsbereich der Gehrung den Schweißwulst abzutragen hat. Der erfindungsgemäße Vorschlag positioniert also die gesamte Einheit bezüglich dem Halter, wobei der Halter in der Ebene rechtwinklig zur Rahmenebene, in Richtung der Gehrung im Verbindungsbereich bewegt wird.

In einer bevorzugten Variante der Erfindung ist vorgesehen, daß seitlich neben dem Bearbeitungswerkzeug Gleitflächen vorgesehen sind. Um ein unbeabsichtigtes Einstechen des Bearbeitungswerkzeuges in den Verbindungsbereich des geschweißten Rahmens beziehungsweise Rahmenteiles zu vermeiden, sind entsprechende Gleitflächen neben dem Bearbeitungswerkzeug angeordnet. Sie definieren letztendlich die vertikale Position des Spanmessers (rechtwinklig zur Rahmenebene).

Die Gleitflächen sind dabei seitlich neben der Schneide des Spanmessers zum Beispiel auf dem Spanmesserkörper direkt angeordnet oder aber in einem separatem Bauteil neben dem Spanmesser vorgesehen. Günstigerweise befinden sich die Gleitflächen zwischen dem Spanmesser und dem Taster.

Die Gleitflächen dienen nicht für eine Positionierung oder Führung des Messers bezüglich des Verbindungsbereiches beziehungsweise der exakten Ecklage des Bearbeitungswerkzeuges, sondern definieren allein die Höhenlage des Bearbeitungswerkzeuges bei der spanabhebenden Bearbeitung. Die Eckführung erfolgt durch die (zurückstehenden) Taster.

In einer bevorzugten Ausgestaltung der Erfindung ist vorgesehen, daß das Bearbeitungswerkzeug als Spanmesser oder als Kreissägenblatt ausgebildet ist. Das Bearbeitungswerkzeug ist spanabhebend. Dies kann zum Beispiel durch ein spanabziehendes Spanmesser erfolgen oder aber auch durch ein Kreissägenblatt. Auch wenn nachfolgend oftmals von einem Spanmesser unmittelbar gesprochen wird, sei hierauf die Erfindung nicht festgelegt, anstelle des Spanmessers ist auch der Begriff des Bearbeitungswerkzeuges einsetzbar, die Erfindung ist insofern nicht auf die Verwendung eines Spanmessers beschränkt.

Entsprechend einer vorteilhaften Weiterbildung der Erfindung ist das Spanmesser V-förmig ausgebildet. Die V-förmige Ausbildung des Spanmessers bewirkt, daß im Gehrungsbereich der geschweißten Profilstücke bzw. der Rahmen die überstehenden Schweißwulste sauber abgestochen bzw. abgeschnitten werden können. Die V-Form ist dabei ebenfalls vorteilhaft, weil dadurch der beim Schneiden entstehende Widerstand besser verteilt wird.

Von Vorteil ist es auch, wenn das Spanmesser entlang des Verbindungsbereiches bzw. der Gehrungsfläche bewegbar ist. Dies hat zur Folge, daß der gesamte Verbindungsbereich der Profile an den Gehrungsflächen bearbeitbar ist.

Von Vorteil ist es dabei, wenn das Spanmesser mit der Eckverputzvorrichtung rechtwinklig zur Rahmenebene bewegbar ist. Es ist selbstverständlich auch möglich, daß das Spanmesser mit der Eckverputzvorrichtung sowohl rechtwinklig zur Rahmenebene als auch im Winkel dazu bewegbar ist. Für die Erfindung ist es jedoch zunächst ausreichend, wenn das Spanmesser mit der Eckverputzvorrichtung lediglich rechtwinklig zur Rahmenebene bewegbar ist, um die erfindungsgemäß gestellte Aufgabe zu lösen. Die winklige Bewegbarkeit ist dabei eine vorteilhafte Weiterbildung der Erfindung.

Erfindungsgemäß wurde gefunden, daß es von Vorteil ist, wenn das Spanmesser bezüglich der Taster winklig, vorzugsweise in einer rechtwinklig orientierten Bewegungsrichtung beweglich ausgebildet ist. Damit lassen sich Höhenjustierungen aufgrund von Profiländerungen problemlos durchführen. Dies gilt natürlich auch für eine federgelagerte Ausführung, bei der diese Verstellung dann automatisch erfolgt.

Von Vorteil ist es auch, wenn das Spanmesser mit den Tastern in gleicher Ebene bzw. in einer parallel zu den Tastern orientierten Bewegungsrichtung bewegbar ist. Auch damit lassen sich insgesamt die Verstellmöglichkeiten verbessern und eine universelle Einsetzbarkeit ist dadurch noch besser gegeben.

Eine vorteilhafte Weiterbildung der Erfindung schlägt vor, daß das Spanmesser gegenüber der jeweiligen Bewegungsrichtung abklappbar, verstellbar bzw. abwinkelbar gelagert bzw. ausgebildet ist. Auch damit lassen sich bestimmte Justierungen gegenüber der Bearbeitungsfläche vornehmen. Der Schneidwinkel der Spanmesser gegenüber der zu bearbeitenden Fläche läßt sich ebenfalls, beispielsweise aufgrund von unterschiedlichen Materialien, verändern.

Entsprechend einer Weiterbildung der Erfindung weist das Spanmesser einen Messerbereich auf, der als Schneide ausgebildet ist. Hierbei ist es vorgesehen, daß das Spanmesser beispielsweise mit einer geraden Schneide versehen ist.

Das Spanmesser kann entsprechend einer Ausbildung der Erfindung ebenfalls eine zurückspringende Schneide aufweisen. Von Vorteil ist es auch, wenn die Schneide des Spanmessers seitlich neben der Schneide bzw. der Kante gefast ist. Dies ist insbesondere dann von Vorteil, wenn - wie erfindungsgemäß vorgeschlagen - nicht die gesamte dem Profil zugewandte Spanmesserseite als Schneide ausgebildet ist, sondern es ausreicht, nur den Messerbereich als Schneide auszubilden, der tatsächlich den unerwünschten Schweißwulst abzuheben bzw. abzustechen hat. Seitlich neben der Schneide ist es daher möglich, die bereits erwähnten Gleitflächen anzuordnen, die lediglich dazu dienen, daß das Messer auf dem Profil gleitet und nicht in das Profil einsticht. Dies wird in einfacher Weise dadurch erreicht, daß - wie nach der Ausführungsform der Erfindung vorgeschlagen - an dem Spanmesser seitlich neben der Schneide die Schneide bzw. die Kante gefast oder gebrochen wird, wodurch sich eine gegenüber der Schneide zurückgesetzte Gleitfläche ergibt.

Erfindungsgemäß ist es auch vorgesehen, daß die Schneide des Spanmessers bezüglich der Verlängerung der am Rahmen anliegenden Tastkante des Tasters vorsteht. Dies hat zur Folge, daß die Tastkanten immer exakt am Profil bzw. an beiden Profilstücken der geschweißten Profilecke anliegen und die Schneide des Spanmessers trotzdem ausreichende Bewegungsfreiheit besitzt, um die Schweißwulst im Bereich der Gehrung abzuheben bzw. abzustechen.

Erfindungsgemäß wurde auch gefunden, daß es von Vorteil ist, wenn die Gleitflächen derart ausgebildet sind, daß das Spanmesser auf dem Profil gleitet. Dies wurde zuvor mehrfach beschrieben.

Die Taster sind entsprechend einer Weiterbildung der Erfindung federgelagert. Damit wird erreicht, daß immer eine exakte Anlage der Taster an den Profilstücken gewährleistet ist, auch wenn das Spanmesser sich noch in einer gegebenenfalls zurückgezogenen Position befindet. Die Taster bleiben jedoch auch in der exakten Anlageposition, wenn das Spanmesser die Schweißwulst im Gehrungsbereich abschneidet.

Ein weiterer Aspekt der Erfindung ist dadurch angegeben, daß der Taster Tastflächen aufweist, die an dem Rahmen bzw. den Profilstücken anlegbar sind. Damit wird die Tastanlagefläche vergrößert und die Exaktheit weiter verbessert.

Von Vorteil ist es ebenfalls, wenn die Tastflächen winklig, vorzugsweise rechtwinklig oder - entsprechend des Winkels der geschweißten Profilstücke - zueinander orientiert angeordnet bzw. anordenbar sind. Während die eine Ausführungsform günstig für die Bearbeitung von rechtwinkligen Rahmen oder Rahmenstücken geeignet ist, ist die winklig anzuordnende Ausführung dafür gedacht, auch andere Rahmen bearbeiten zu können, die beispielsweise als Sechseck ausgebildet sind, bei dem der Rahmen in den Verbindungsbereichen eben nicht im Winkel von 90° zueinander orientiert ist.

Der Taster ist entsprechend einer Weiterbildung der Erfindung auf einer Führungsstange beweglich geführt und in einem Tasterlager bzw. einer Tasterlagerung gelagert. Als Tasterlagerung ist dabei beispielsweise eine Feder auf dieser angeordnet, deren Federkraft den Taster gegen das Profil bzw. die Profilstücke drückt.

Die Führung ist beispielsweise als Rundprofil ausgebildet und in der Tasterlagerung selbst befestigt. Damit läßt sich der Taster dann in einer Führungsbohrung, die mit der Führung zusammenwirkt, sehr günstig und genau führen.

Von Vorteil ist es auch, wenn die Führung in Art einer Nut- und Federführung ausgebildet ist. Dies kann eine einfache Nut- bzw. Federführung sein, es kann sich selbstverständlich auch um kompliziertere Ausführungsformen handeln, wie beispielsweise Schwalbenschwanznuten und dazu korrespondierende Führungen.

Die Führung kann selbstverständlich entsprechend einer Variante der Erfindung schienenartig ausgebildet sein.

Die Feder ist entsprechend einer Variante der Erfindung als eine auf Druck oder Zug belastbare Spiralfeder ausgebildet. Selbstverständlich ist die Erfindung nicht darauf eingeschränkt, sondern es ist auch durchaus, und gerade im Bearbeitungsmaschinenbau für Kunststoffbearbeitungsmaschinen, als eine günstige Variante vorgesehen, wenn die Feder als pneumatische Feder vorgesehen ist.

Die Feder kann dabei auf einer eigenen Federführung angeordnet sein. Eine Vereinfachung dieser Variante ist jedoch auch gegeben, indem beispielsweise die Feder nach einer Weiterbildung der Erfindung auf der Führung für den Taster selbst angeordnet ist.

Von Vorteil ist es weiterhin, wenn das untere Ende des Tasters in Gebrauchsstellung unterhalb der Messerschneide, insbesondere deutlich unterhalb der Messerschneide angeordnet ist. Dies hat insbesondere zur Folge, daß eine Profilbearbeitung im Eckbereich des Profilrahmens mit der Erfindung möglich ist, auch wenn der Rahmen verhältnismäßig dick ist.

Vorteilhafterweise wird die Höhe des Tasters so gewählt, daß sie mindestens der relativen Dicke des Profiles bzw. dem vertikalen Abstand zwischen dem niedrigsten und höchsten Punkt des Spanmessers für die Bearbeitung entspricht.

Von Vorteil ist es selbstverständlich, wenn der Taster entlang der Führung entsprechend der Länge der zu bearbeitenden Gehrungsfläche beweglich geführt bzw. gelagert ist. Dies ist insbesondere notwendig, um den gesamten Bereich der Gehrungsfläche bearbeiten zu können.

Die Erfindung ist nicht nur auf eine Ausführungsform beschränkt, bei der das Spanmesser bezüglich der Taster beweglich ist, sondern auch auf eine Ausführung, bei der das Spanmesser relativ zur Eckverputzvorrichtung bewegbar ausgebildet ist.

Es ist ein weiterer Vorteil der Erfindung, daß die Schneide des Spanmessers bezüglich der Verlängerung der am Rahmen anliegenden Tastkante des Tasters vorsteht. Diese Anordnung ist im Bezug auf das Rahmeninnere zu sehen. Das in Eingriff stehende Spanmesser steht insofern gegenüber dem Taster beziehungsweise dessen Tastkantenverlängerung vor. Diese Anordnung ist möglich, da gemäß der Erfindung vorgesehen ist, daß die Taster nur für eine Positionierung des Spanmessers im Eckbereich dienen, wodurch auch eine Bearbeitung von schwierig orientierten Profilflächen, insbesondere wenn diese waagerecht beziehungsweise in Rahmenebene liegen, sicher möglich ist, da auch hier eine Führung des Messers erfolgt.

In einer bevorzugten Variante der Erfindung ist es vorgesehen, daß das Bearbeitungswerkzeug, zum Beispiel das Spanmesser, auf einem Werkzeugträger in einer Bewegungsrichtung, welche parallel zur Rahmenebene ist, bewegbar gelagert ist. Durch diese Variante wird erreicht, daß das Bearbeitungswerkzeug, welches über die Eckverputzvorrichtung in einer Ebene, die senkrecht zur Rahmenebene ist und parallel zum Gehrungsbereich orientiert ist, entsprechend ausrichtbar ist. Es reicht nicht aus, daß das Messer nur in einer Ebene parallel zur Gehrung bewegt wird, es soll exakt der Verbindungsbereich bei der Gehrung abgearbeitet werden, weswegen durch diesen Vorschlag erreicht wird, das Bearbeitungswerkzeug entsprechend ausrichtbar zu gestalten, wenn es eine entsprechende Beweglichkeit in der Rahmenebene aufweist. Es handelt sich dabei entweder um eine Bewegung die nur eindimensional erfolgt oder aber eine Bewegung, die auch zweidimensional, zur Rahmenebene parallel ausgestaltet ist.

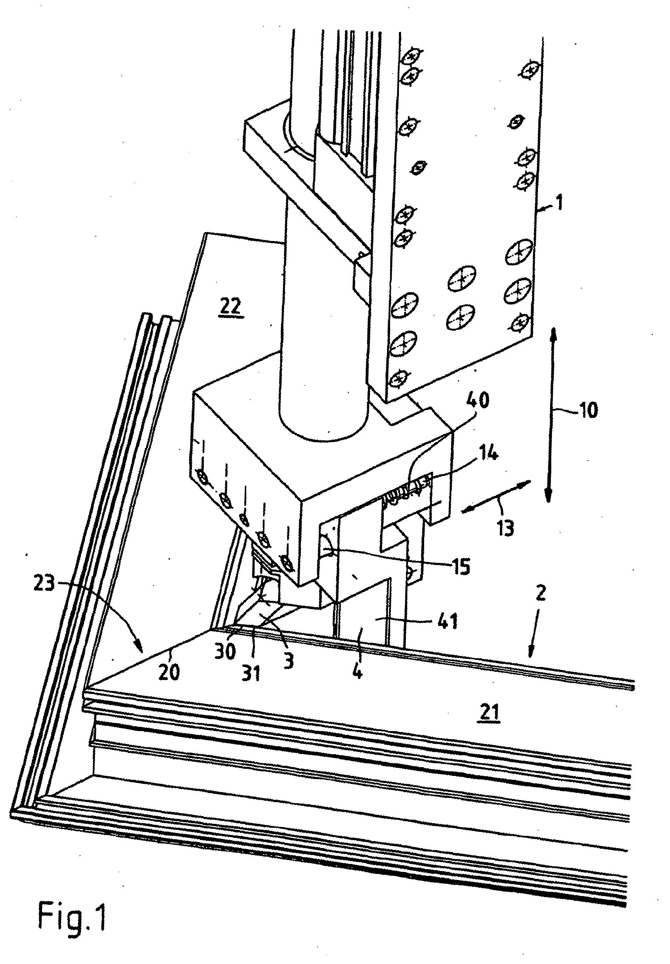

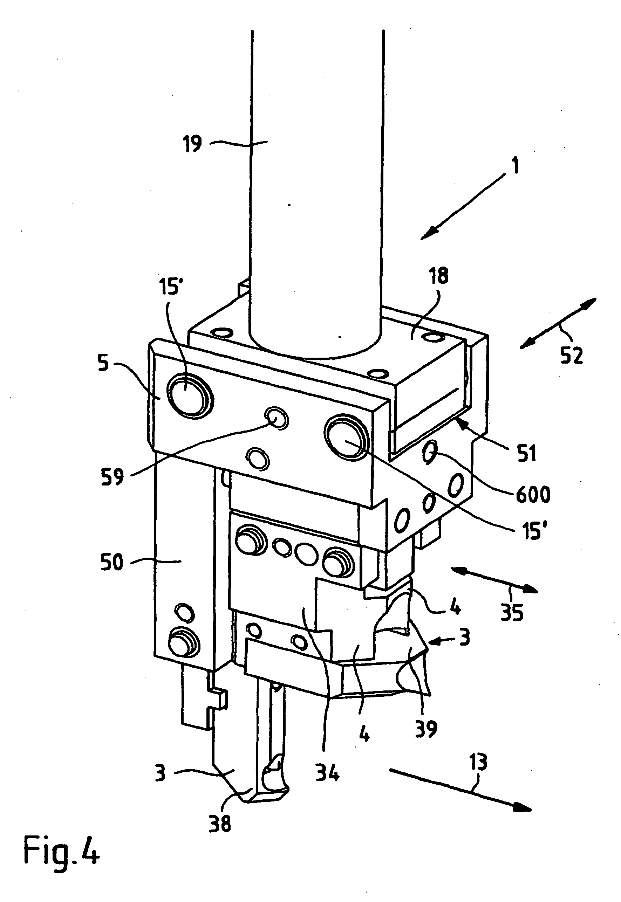

Die Anordnung ist dabei nicht nur darauf begrenzt, eine Beweglichkeit des Bearbeitungswerkzeuges rechtwinklig zum Verbindungsbereich anzugeben, sondern sie erstreckt sich in gleicher Weise auch auf die Beweglichkeit parallel zum Verbindungsbereich. Dieses Beispiel ist zum Beispiel in Fig. 1 gezeigt, wohingegen sich die andere Variante aus Fig. 4 ergibt.

Eine Ausgestaltung hierzu ist zum Beispiel die erfindungsgemäße Variante, bei welcher das Bearbeitungswerkzeug auf einer kreuzschlittenartigen Führung in einer Ebene, bevorzugt parallel zur Rahmenebene, entlang zweier Bewegungsrichtungen bewegbar gelagert ist.

Die kreuzschlittenartige Ausgestaltung ergibt, daß das Bearbeitungswerkzeug in einer Ebene in zwei Bewegungsrichtungen bewegbar ist. Die Bewegungsrichtungen sind dabei geschickterweise orthogonal orientiert, bevorzugt rechtwinklig. Es resultiert durch eine solche Ausgestaltung eine optimale Ausrichtung des Bearbeitungswerkzeuges bezüglich der zu bearbeitenden Rahmenecke, das Bearbeitungswerkzeug kann optimal auf die Lage der Gehrung ausgerichtet werden.

In einer bevorzugten Variante der Erfindung ist vorgesehen, daß das Bearbeitungswerkzeug unterhalb des Tasters angeordnet ist. Bei dieser Variante der Erfindung kommt es nicht darauf an, wie nun die relative Lage der Tastflächen zu den Bearbeitungsschneiden ist. Die Anordnung ist insofern sehr platzsparend, da auch sehr spitze Winkel realisiert werden können, da die verschiedenen Elemente nicht nebeneinander sondern übereinander angeordnet sind. Da die Taster insbesondere zum Ausrichten des Bearbeitungswerkzeuges vor der eigentlichen Bearbeitung dienen, wird gemäß diesem Vorschlag auch vorgesehen, daß kein Zusammenwirken des Tasters mit den Profilstücken während der eigentlichen Bearbeitung erfolgt.

Durch eine Bremse wird geschickterweise erreicht, die Beweglichkeit von Taster und/oder Bearbeitungswerkzeug bezüglich dem Halter zu reduzieren und sogar festzulegen. So ist zum Beispiel vorgesehen, daß Taster und Bearbeitungswerkzeug, zum Beispiel in der bereits definierten Bewegungseinheit, zusammengefaßt sind und beide in einer Ebene, die parallel zur Rahmenebene ist, in zwei Dimensionen bewegbar sind. Durch das Festlegen zumindest eines Freiheitsgrades reduziert sich die Beweglichkeit von zwei Freiheitsgraden auf einen Freiheitsgrad. Auch kann die Beweglichkeit zwischen Halter einerseits und Taster und/oder Bearbeitungswerkzeug andererseits vollständig eliminiert werden, also Taster beziehungsweise Bearbeitungswerkzeug bezüglich des Halters festgelegt werden. Auch ist es möglich, die Bremse als Rutschkupplung auszugestalten und so zum Beispiel nur eine Reduzierung der Beweglichkeit vorzusehen, was zum Beispiel im Kollisionsfall oder bei Fehlbearbeitungen hilfreich ist.

Gemäß einer Variante der Erfindung ist dabei vorgesehen, daß die Bremse auf mindestens eine der Bewegungen des Bearbeitungswerkzeuges in der kreuzschlittenartigen Führung wirkt. So ist zum Beispiel vorgesehen, daß die Bremse nicht zwingend beide Bewegungsrichtungen beeinflußt, sondern wahlweise nur die eine oder die andere. Dies kann, je nach Anwendungsbereich, von Vorteil sein. Auch kann es günstig sein zum Beispiel einen Freiheitsgrad in der Beweglichkeit von Taster beziehungsweise Bearbeitungswerkzeug zu eliminieren, wenn zum Beispiel eine entsprechende Dimension bereits fest eingestellt ist und es so keiner weiteren Variabilität mehr bedarf.

Geschickterweise besitzt die Bremse je eine Bremsscheibe für jede Bewegungsrichtung. Jede Bremsscheibe ist einer Bewegungsrichtung zugeordnet.

Um die Bremse auch betätigen zu können ist ein Bremsantrieb vorgesehen. Geschickterweise wirkt ein Bremsantrieb auf beide Bremsscheiben, wodurch sich der Aufwand für den Bremsantrieb entsprechend reduziert. Natürlich ist es alternativ möglich, je einen Bremsantrieb für jede Bremsscheibe vorzusehen.

Es bringt konstruktive Vorteile, wenn die Anordnung so gewählt ist, daß der Bremsantrieb über die erste Bremsscheibe auf die zweite Bremsscheibe wirkt. Zunächst ist eine solche Anordnung günstig, wenn nur ein Bremsantrieb vorgesehen ist. Des Weiteren eignet sich eine solche Variante auch dann, wenn die beiden Bremsscheiben verhältnismäßig nah beieinander angeordnet sind und eine platzsparende Konstruktion von Vorteil ist.

Es ist von Vorteil, die Bremse im Halter vorzusehen. Der Halter ist zum Beispiel rohrartig ausgebildet und nimmt platzsparend die Bremse beziehungsweise den Bremsantrieb auf.

Günstigerweise ist der Bremsantrieb als Pneumatikzylinder ausgebildet oder als kaskadische Pneumatikzylinderanordnung ausgestaltet. Die Verwendung eines Pneumatikzylinders hat erhebliche Vorteile. Bei vorgenannten Eckverputzvorrichtungen, die oftmals ja an größeren Anlagen zur Bearbeitung von Kunststoff-Fenstern oder Kunststoff-Türen Verwendung finden, sind oftmals Pneumatikleitungen, zum Beispiel für die Betätigung von Halteanschlägen für die Profilstücke und so weiter, eingesetzt. Für die Pneumatik muß also kein zusätzlicher Aufwand vorgehalten werden.

In einer speziellen Variante wird dabei auch ein kaskadischer Pneumatikzylinder vorgeschlagen, durch welchen durch eine größere Anzahl hintereinander angeordneter Kolben die effektive Kolbenfläche, trotz vorgegebenem Durchmesser des Halters (dieser ist zum Beispiel rohrartig), erheblich vergrößert wird. Dadurch wird eine hohe Bremskraft möglich.

Natürlich ist alternativ vorgesehen, den Bremsantrieb elektrisch, elektromagnetisch, elektromechanisch oder hydraulisch und so weiter auszugestalten.

In einer weiteren erfindungsgemäßen Variante ist vorgesehen, daß die Bremse für die eine oder andere Bewegungsrichtung aktivierbar bzw. deaktivierbar ist. Der Einsatz der Bremsscheiben wird in geeigneter Weise ermöglicht oder ausgeschlossen, wodurch sich dann ergibt, daß die Bremse für die Bewegungsrichtung einsetzbar ist oder nicht. Hierdurch wird die Variabilität der gesamten erfindungsgemäßen Eckverputzvorrichtung entsprechend erhöht, da es auch Anwendungsfälle gibt, bei welchen eine zu hohe Beweglichkeit des Bearbeitungswerkzeuges bzw. der Halter störend ist. Dabei ist die Deaktivierung der Bremsen so ausgestaltet, daß zum Beispiel eine entsprechende Einstellung wählbar und entsprechend feststellbar ist. Die Aktivierung bzw. Deaktivierung erfolgt dabei zum Beispiel manuell oder automatisch bzw. durch die Maschinensteuerung.

Günstigerweise ist die Bremse mit einer Bremseinheit ausgestattet, die in der kreuzschlittenartigen Führung angeordnet ist und die einerseits der ersten Bremsscheibe als Widerlager dient und andererseits die zweite Bremsscheibe bildet. Die Bremseinheit nimmt die von der ersten Bremsscheibe eingeprägte Kraft als Widerlager auf und durch das Zusammenpressen der ersten Bremsscheibe auf dem Widerlager (der Bremseinheit) wird die erste Bewegungsrichtung eliminiert. Die Bremseinheit ihrerseits ist beweglich gelagert und vermag auf ein weiteres, zweites Widerlager mit seiner zweiten Bremsscheibe zu drücken, wodurch auch die Bewegung in diese zweite Bewegungsrichtung gebremst bzw. festgelegt wird. Geschickterweise wird hierzu in der Kreuzführung, also bei den sich geschickterweise rechtwinklig zueinander kreuzenden Führungen, die Bremseinheit wie beschrieben eingesetzt. Durch diese zentrale Anordnung in der kreuzschlittenartigen Führung wird die Erfindung effektiv und platzsparend eingesetzt.

Geschickterweise ist vorgesehen, daß der Werkzeugträger Teil der Kreuzschlittenführung ist. So ist der Werkzeugträger zum Beispiel in einer ersten Richtung beweglich am Halter geführt und besitzt selber die zweite, orthogonale Achse, wodurch sich die Kreuzschlittenführung im Sinne der Erfindung definiert.

Dabei ist gemäß einer weiteren erfindungsgemäßen Variante vorgesehen, daß die Eckverputzvorrichtung zwei Bearbeitungswerkzeuge aufweist, wobei ein erstes Bearbeitungswerkzeug vom Werkzeugträger und ein zweites Bearbeitungswerkzeug von der kreuzschlittenartigen Führung gehalten ist. In diesem Zusammenhang sei zum Beispiel auf Fig. 4 verwiesen. Die beiden Messer sind entsprechend ihren Einsatzbereichen optimiert, wobei das untere, in diesem Fall zweite Messer in der Regel eine vertikale Bewegung ausführt und eine exakte Positionierung, insbesondere rechtwinklig zum Verbindungsbereich (der Gehrung), innerhalb der Rahmenebene (zum Bearbeiten der Innenecke) von Vorteil ist.

Das andere, zweite Bearbeitungswerkzeug hingegen wird von der kreuzschlittenartigen Führung gehalten und besitzt zusätzlich noch eine weitere, zum Beispiel rechtwinklige, Beweglichkeit. Diese Beweglichkeit wird zum Beispiel federunterstützt dazu ausgenützt, das Bearbeitungswerkzeug in ausreichendem Maße mit Kraft gegen die Oberfläche des Profiles im Verbindungsbereich zu führen.

Dabei sind geschickterweise beide Bearbeitungswerkzeuge, also ersten und zweites Bearbeitungswerkzeug, unterhalb des Tasters angeordnet.

Gemäß einer weiteren erfindungsgemäßen Variante ist dabei vorgesehen, daß die Eckverputzvorrichtung bzw. der Halter durch eine NC-Steuerung dem Profilverlauf entsprechend zur Verarbeitung über den Verbindungsbereich geführt wird. Die NC- oder Computersteuerung besitzt den Konturverlauf des Profiles und fährt diesen Verlauf exakt nach. Auf ein zusätzlich aufwendiges Abtasten der Oberfläche bei diesem Bearbeitungsschritt kommt es dann nicht an. Der Konturverlauf wird aus dem Speicher entnommen und der Computersteuerung entsprechend vorgegeben.

Insbesondere wird bei dem Einsatz einer NC-Steuerung zur Bewegung der Eckverputzvorrichtung im Verbindungsbereich der Einsatz einer Führung durch die Taster eingespart.

In einer bevorzugten Variante der Erfindung ist vorgesehen, daß vor der Bearbeitung die Bremsen geöffnet sind für eine Ausrichtung von Taster bzw. Bearbeitungswerkzeug bezüglich Halter und während der Bearbeitung die Bremse festgelegt ist. Die Anordnung ist dabei so gewählt, daß Taster bzw. Bearbeitungswerkzeug einen gewissen Einstellbereich in der Rahmenebene besitzen um insbesondere das Bearbeitungswerkzeug so optimal zu positionieren, daß dieses bei einer Bewegung der gesamten Vorrichtung, zum Beispiel entlang dem von der NC-Steuerung vorgegebenen Konturverlauf, exakt den Verbindungsbereich (die Gehrung) bearbeitet.

Die Erfindung betrifft nicht nur eine Eckverputzvorrichtung wie eingangs beschrieben, sondern bezieht sich in gleicher Weise auch auf ein Verfahren zur Bearbeitung, insbesondere ein Verputzen der Verbindung von aus Profilstücken gebildeten Rahmen bzw. Rahmenteilen, insbesondere für Fenster- oder Türrahmen, wo ein Bearbeitungswerkzeug zwischen zwei Tastern durch einen Halter im Verbindungsbereich bewegt wird.

Bei der eingangs beschriebenen europäischen Patentschrift liegen die beiden Taster während des Bearbeitungsprozesses seitlich neben der Schneide an. In horizontalen Abschnitten ist eine Verarbeitung mit dem Verfahren nach dem Stand der Technik nicht möglich. Die Aufgabe der vorliegenden Erfindung umfaßt daher auch ein Verfahren zur Bearbeitung, insbesondere zum Verputzen der Verbindung von aus Profilstücken gebildeten Rahmen und Rahmenteilen, bei der unabhängig von der konkreten Profilausgestaltung immer ein gutes Bearbeitungsergebnis erreicht werden soll.

Gelöst wird diese Aufgabe dadurch, daß von einem Verfahren wie oben beschrieben ausgegangen wird, bei welchem vor der Bearbeitung der oder die Taster bezüglich des Halters derart beweglich ist, daß durch Anlegen des Tasters an den Profilstücken der Taster bezüglich des Halters ausgerichtet wird und nach dem Ausrichten die Bearbeitung erfolgt und, nachdem der Taster bezüglich dem Halter ausgerichtet ist, die Lage zwischen Taster und Halter durch eine Bremse festgelegt wird.

Die Aufgabe der Taster nach dem erfindungsgemäßen Verfahren ist eine andere, wie bei der Lösung nach dem Stand der Technik. Bei der ersten erfindungsgemäßen Variante verbleibt der Taster während der gesamten Bearbeitung an den jeweiligen Profilstücken, wie das zum Beispiel in Fig. 1 gezeigt ist. Die Bewegung des Bearbeitungswerkzeuges beziehungsweise des Spanmessers erfolgt unabhängig von der Stellung des Tasters. Bei der anderen Variante wird der Taster während der Bearbeitung, also nach dem Ausrichten, nicht mehr an den jeweiligen Profilstücken anliegen.

Den beiden vorgenannten Gedanken gemeinsam ist es, daß die Taster dazu ausgenützt werden, sich in geeigneter Weise im Eckbereich an den Profilstücken anzutasten und so das Bearbeitungswerkzeug auszurichten. Durch den Vorschlag nach der Erfindung für ein Verfahren, wird die relative Lage von Taster (natürlich auch dem Bearbeitungswerkzeug) und dem Halter "mechanisch eingespeichert". Letztendlich ist durch diesen Schritt die richtige Lage des Bearbeitungswerkzeuges bezüglich der Gehrung gefunden, damit bei der nachfolgenden Bewegung das Bearbeitungswerkzeug exakt in der Fläche, welche rechtwinklig auf der Rahmenebene steht und den Gehrungsbereich beinhaltet, geführt ist. Maßtoleranzen, die bei solchen Bearbeitungen immer auftreten können, sind eliminiert. Günstigerweise wird dann vorgeschlagen, daß während der Bearbeitung die Taster nicht an den Profilstücken anliegen. Bei den anderen Varianten, insbesondere bei der Lösung nach dem Stand der Technik, liegen die Taster während der Bearbeitung an und schleifen gegebenenfalls über die Sichtflächen des Rahmens weg. Dies kann zu optischen Beeinträchtigungen führen. Werden die Taster gemäß dem erfindungsgemäßen Vorschlag aber von den Profilstücken entfernt, so daß sie nicht mehr an diesen anliegen - die Position von Taster/Bearbeitungswerkzeug zu Halter ist eingebremst -, so folgt, ohne zusätzliche Gefahr einer Beschädigung, ein optimales Bearbeiten.

Vorteilhafterweise ist vorgesehen, daß während der Bearbeitung die Eckverputzvorrichtung beziehungsweise der Halter durch eine NC-Steuerung, also eine Computersteuerung, die dem Profilverlauf in dem Verbindungsbereich folgt, geführt wird. Die NC-Steuerung kennt den Querschnitt des Profiles. Je nach Ausgestaltung der Gehrung ist nun der konkrete Konturverlauf etwas unterschiedlich, da ein rechtwinkliger Gehrungsschnitt einem Querschnitt entspricht, bei einem Gehrungsschnitt unter 45° aber eine entsprechende Verzerrung zu beachten ist. Dies kann aber bei einem vorgegebenen Profilquerschnitt durch die Steuerung leicht ermittelt werden und zwar bei jedem beliebigen Eckwinkel der aneinanderstoßenden Profilstücke. Durch diese erfindungsgemäße Variante wird erreicht, daß auch sehr spitzwinklig gearbeitet werden kann, da keine störenden Taster während der Bearbeitung im engen Eckbereich auch noch vorzuhalten sind, sondern nur das spanabhebende Werkzeug entsprechend zu führen beziehungsweise zu bewegen ist.

In diesem Zusammenhang wird insbesondere darauf hingewiesen, daß alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

In der Zeichnung ist die Erfindung schematisch dargestellt. Es zeigen:
- Fig. 1, 2, 3, 4: je dreidimensionale Ansichten der erfindungsgemäßen Eckverputzvorrichtung,
- Fig. 5: ein vertikaler Schnitt durch eine erfindungsgemäße Eckverputzvorrichtung.

In Fig. 1 ist die erfindungsgemäße Eckverputzvorrichtung 1 gezeigt. Gut ist zu erkennen, wie die Eckverputzvorrichtung im Eckbereich 23 des Rahmens 2 den bei dem Verschweißen der Profilstücke 21, 22 im Gehrungsbereich beziehungsweise Verbindungsbereich 20 entstehenden Schweißwulst abträgt. Aufgrund des Verschweißens der Profilstücke 21, 22 und des hernach folgenden Zusammenfügens ergibt sich ein nach außen vorstehender Schweißwulst, der durch die Eckverputzvorrichtung zumindest im Eckbereich abzutragen ist.

Auch wenn nachfolgend von einem Rahmen gesprochen wird, so ist die Erfindung auf die Bearbeitung eines Rahmens nicht begrenzt, sondern kann gleichwohl, gleichbedeutend auch für Rahmenteile eingesetzt werden. Insofern ist die Erfindung nur an einem Rahmen beschrieben, umfaßt aber in gleicher Weise auch einen Teilrahmen oder Rahmenteile.

Die beiden zusammengeschweißten Profilstücke 21, 22 definieren eine Rahmenebene, die in der Regel zumindest für Bearbeitungszwecke horizontal orientiert ist. Es gibt aber auch eine stehende Bearbeitungen, bei denen dann die Rahmenebene vertikal oder schräg orientiert ist. Die Eckverputzvorrichtung 1 ist zumindest entlang zweier Achsen, die bevorzugt aufeinander orthogonal oder rechtwinklig stehen, bewegbar. Die erste Achse erlaubt eine Bewegung in der Rahmenebene, dies ist mit dem Doppelpfeil 13 angedeutet. Günstigerweise ist diese Bewegung 13 so orientiert, daß das Spanmesser 3 entlang des Verbindungsbereiches 20 beziehungsweise der Gehrungsfläche 20 bewegbar ist.

Des Weiteren ist die Eckverputzvorrichtung rechtwinklig zur Rahmenebene bewegbar, dies ist durch den Doppelpfeil 10 angedeutet. Hierdurch ist es möglich, daß das Spanmesser auch schräge Bearbeitungen oder Bearbeitungen die rechtwinklig zur Rahmenebene auszuführen sind, ausführt.

Für das Abtragen des Schweißwulstes ist an der Eckverputzvorrichtung ein Spanmesser 3 vorgesehen. Das Spanmesser 3 ist in der hier gezeigten Ausgestaltung V-förmig ausgebildet. Es ist aber auch möglich, eine andere Ausgestaltung der Schneidenanordnung zu realisieren, zum Beispiel eine gerade Schneide oder eine zurückspringende Schneide.

Dabei ist zu beachten, daß nicht die gesamte, dem Profil zugewandte Spanmesserseite als Schneide ausgebildet ist, sondern es reicht oftmals aus, nur den Messerbereich als Schneide 30 auszubilden, der tatsächlich den unerwünschten Schweißwulst abzuheben hat. Seitlich neben der Schneide 30 ist es daher möglich, daß Gleitflächen 31 (vergl. Fig. 1) angeordnet sind, die dazu dienen, daß das Messer auf dem Profil gleitet und nicht in das Profil einsticht. Dies wird einfach dadurch erreicht, daß an dem Spanmesser seitlich neben der Schneide 30 die Schneide beziehungsweise Kante gefast oder gebrochen wird, wodurch sich eine gegenüber der Schneide 30 zurückgesetzte Gleitfläche 31 ergibt.

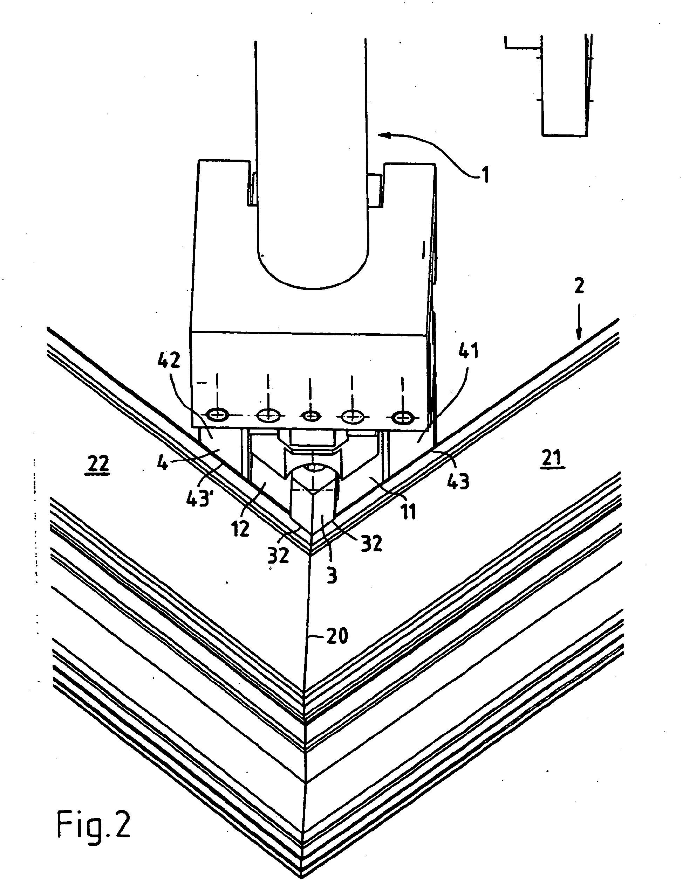

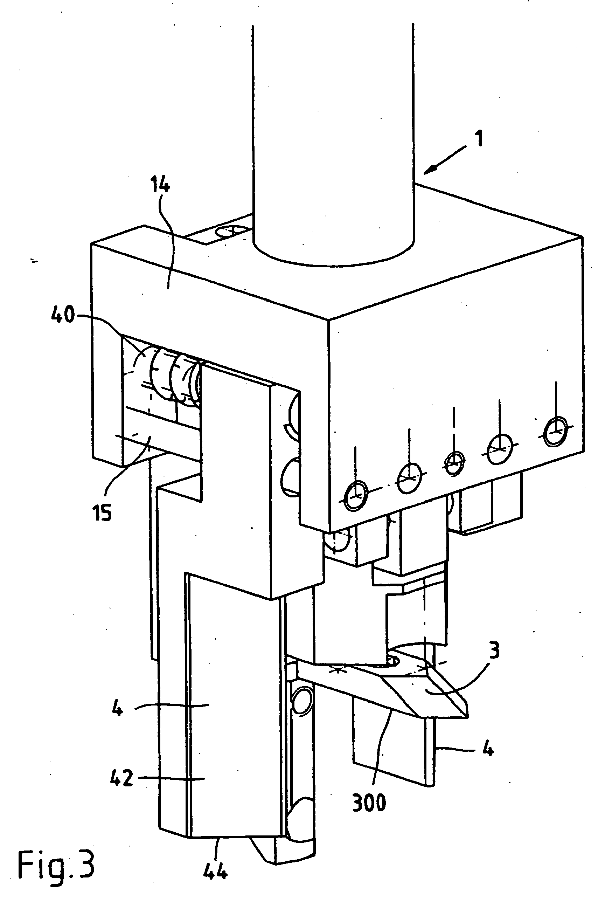

Die Eckverputzvorrichtung 1 besitzt zwei Taster 4. Diese sind so angeordnet, daß sich das Spanmesser 3 zwischen den beiden Tastern 4 befindet. Dies ist zum Beispiel in Fig. 2 gezeigt. Das Messer 3 ist exakt im Eckbereich des Rahmens 2 positioniert, die beiden Taster 41, 42 liegen an den in der Ecke verschweißten Profilstücken 21, 22 an, wobei der Taster 41 an dem Profil 21, der Taster 42 an dem Profil 22 anliegt. Es ist gut zu erkennen, daß die vordere Kante 32 des Spanmessers 3 gegenüber der Verlängerungen der Tastkanten 43, 43' derart vorsteht, daß es in den Eckbereich 23 des Rahmens 2 hineinsteht. Dies wird dadurch erreicht, daß die Taster 4 bezüglich des Spanmessers 3 beweglich gelagert sind. Hierfür ist eine Federanordnung gewählt, wie sie zum Beispiel in Fig. 1 oder in Fig. 3 zu erkennen ist. Der Taster 4 ist auf einer Führungsstange 15 an der Tasterlagerung 14 der Eckverputzvorrichtung 1 geführt. Durch die Feder 40 wird der Taster 4 nach vorne, gegen das Profil gedrückt. Erfolgt eine Bewegung der Eckverputzvorrichtung nach vorne, so wird der Taster 4, wenn dieser an den Profilstücken 21, 22 anliegt, gegen die Kraft der Feder 40 zurückgedrängt, das Spanmesser 3 aber folgt der Bewegung der Eckverputzvorrichtung 1 und bearbeitet entsprechend den Profilbereich. Es zählt auch eine Anordnung zur Erfindung, wo das Spanmesser relativ zur Eckverputzvorrichtung bewegbar ist.

In Fig. 3 ist auch gut zu erkennen, daß das untere Ende 44 der Taster 4 deutlich unterhalb der Messerunterseite 300 angeordnet ist. Hieraus resultiert der wesentliche Vorteil, daß eine Profilbearbeitung im Eckbereich mit der Erfindung möglich ist, auch wenn der Rahmen verhältnismäßig dick ist, also eine große Strecke in Richtung rechtwinklig zur Rahmenebene vom Spanmesser bearbeitet wird. Letztendlich ist die Höhe des Tasters 4 so gewählt, daß sie mindestens der relevanten Dicke des Profiles entspricht, wobei die relevante Dicke des Profiles dadurch definiert ist, daß diese der Distanz entspricht, in welcher das Spanmesser 3 auf einer Seite des Rahmens im Eckbereich diesen zu bearbeiten hat. Da zum Beispiel die Sichtfläche des Rahmens 2 zu bearbeiten ist, wird als relevante Höhe hierbei nicht die gesamte Stärke des Profiles verstanden, sondern eben nur der vertikale Abstand zwischen dem niedrigsten und höchsten Bearbeitungspunkt des Spanmessers 3. Da aber die Höhe des Tasters 4 so gewählt wird, wie beschrieben, wird sichergestellt, daß der Taster 4 immer zuverlässig im Eckbereich der miteinander verschweißten Profilstücke 21, 22 liegt.

Die Beweglichkeit des Tasters 4 entlang der Führung 15 ist so bemessen, daß die gewünschte Bearbeitung in Richtung der Rahmenebene beziehungsweise der Gehrungsfläche möglich ist.

In Fig. 1 ist angedeutet, daß sich Gleitflächen 31 an dem Spanmesser 3 neben den Schneiden 30 befinden.

In Fig. 2 sind ebenfalls Gleitflächen 11, 12 vorgesehen, die zwischen dem Spanmesser 3 und den Tastern 4, 41, 42 angeordnet sind.

Der Einsatz der erfindungsgemäßen Eckverputzvorrichtung ist wie folgt. Nachdem der Rahmen 2 beziehungsweise der Teilrahmen positioniert ist, wird die Eckverputzvorrichtung 1 entlang den beiden Achsen im Eckbereich 23 des Rahmens 2 positioniert. Zunächst wird die Eckverputzvorrichtung parallel zur Rahmenebene in Richtung Rahmenebene (Doppelpfeil 13) an die Innenecke angestellt, bis die Taster 41, 42 jeweils an den Profilstücken 21, 22 anliegen. Die Eckverputzvorrichtung 1 wird dann senkrecht rechtwinklig hierzu so weit abgesenkt, daß das Spanmesser 3 zumindest auf dem Verbindungsbereich 20 aufliegt beziehungsweise für einen Einsatz zur Verfügung steht. Das Spanmesser 3 steht dabei etwas gegenüber der Verlängerung der Tastkanten vor. Der darunterliegende Eckbereich wird durch andere spanabhebende Werkzeuge bearbeitet. Nachdem die Eckverputzvorrichtung so positioniert ist, erfolgt ein Vortrieb in Richtung Außenecke entlang des Doppelpfeiles 13, wodurch sich die Taster 4 an den Profilstücken 21, 22 abstützen und gegenüber dem sich vorbewegenden Spanmesser 3 zurückgedrängt werden. Das Spanmesser 3 sticht in den abzuhebenden Schweißwulst ein und trägt ihn ab. Die neben dem Spanmesser 3 angeordneten Gleitflächen verhindern ein zu tiefes Einstechen des Messers 3. Gleichzeitig helfen die Gleitflächen 11, 12, 31 das Messer auch verschiedenen Höhenlagen des Profiles (parallel zur Bewegungsrichtung 10 rechtwinklig zur Rahmenebene) zu folgen. Die Eckverputzvorrichtung ist diesbezüglich beweglich. Die Bewegungsfreiheiten in Richtung der Rahmenebene (Pfeil 1.3) sowie die Höhe der Taster 4 ist so bemessen, daß eine vollständige Abarbeitung des unerwünschten Schweißwulstes im Eckbereich in einem Arbeitsschritt erfolgt.

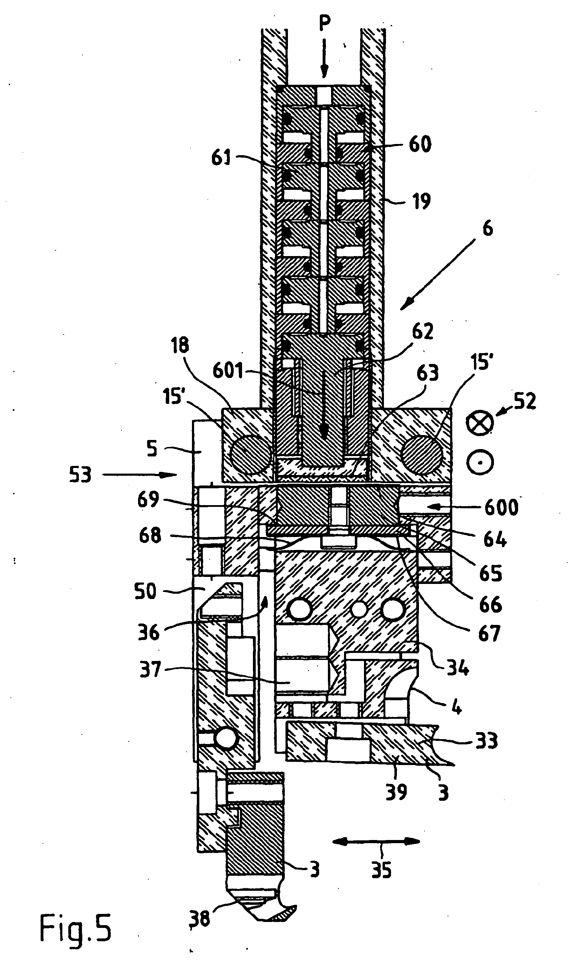

In Fig. 4, 5 ist eine weitere Ausgestaltung der erfindungsgemäßen Eckverputzvorrichtung 1 gezeigt.

Am unteren Ende eines Halters 19 ist ein Halteblock 18 vorgesehen. Der Halteblock 18 trägt links und rechts bzw. vorne und hinten bezüglich des Halters 19 Führungsstangen 15'.

Auf den Führungsstangen 15' ist der Werkzeugträger 5 beweglich gelagert. Die Führungsstangen 15' sind bezüglich den Führungsstangen 15 nach Fig. 1 anders orientiert. Nach der Lösung in Fig. 1 ist die Führungsstange 15 im Wesentlichen parallel zur Bewegungs- bzw. Bearbeitungsrichtung 13 (parallel zur Rahmenebene) angeordnet, in der Lösung nach Fig. 4 bzw. Fig. 5 sind die Führungsstangen 15' hierzu rechtwinklig orientiert.

Der obere Teil des Werkzeugträgers 5 ist U-förmig 51 ausgebildet, wobei das U um den Halteblock 18 herum angeordnet ist. Die Führungsstangen 15' sind entsprechend in dem Werkzeugträger 5, insbesondere in den senkrechten Schenkeln der U-förmigen Aufnahme 51, eingebettet.

Des weiteren ist der Werkzeugträger 5, in der Ansicht gesehen (zum Beispiel Fig. 5), L-artig ausgebildet, wobei der obere, kurze Schenkel von der U-förmigen Aufnahme 51 gebildet ist und woran sich dann ein senkrechter Teil 50 nach unten anschließt.

Aufgrund der Führungsstangen 15' ist der Werkzeugträger 5 rechtwinklig zur Bewegungsrichtung 13 der Eckverputzvorrichtung 1 beweglich. Diese Beweglichkeit ist durch den Doppelpfeil 52 angedeutet.

Der Werkzeugträger 5 ist auch Teil der kreuzschlittenartigen Führung 53. Ein Kreuzschlitten ist dadurch charakterisiert, daß er eine Bewegung in einer Ebene, in der Regel in orthogonal orientierte Richtungen (idealerweise rechtwinklig zueinander), erlaubt. Eine erste Bewegungsrichtung ist durch die Anordnung der Führungsstangen 15' gegeben, die Bewegungsrichtung 52 ist rechtwinklig zur Hauptbewegungsrichtung 13 der Eckverputzvorrichtung (diese ist noch um einen vertikalen Anteil 10, je nach Profilverlauf, überlagert). Die zweite Richtung ist parallel zur Bewegungsrichtung 13. Auf der Unterseite der U-förmigen Aufnahme 51 ist eine Führung vorgesehen, die rechtwinklig zur Längserstreckung der Führungsstange 15' ausgebildet ist.

Über die zweite Führung (nicht gezeigt), welche die Bewegungsrichtung 35 (parallel zur Hauptbewegungsrichtung 13 der Eckverputzvorrichtung) erlaubt, ist der Werkzeughalter 34 gehalten und geführt. Der Werkzeughalter 34 kann sich rückseitig an dem senkrechten Teil 50 des Werkzeugträgers 5, zum Beispiel durch entsprechende Federn, abstützen.

Der Werkzeughalter 34 weist von oben nach unten zunächst die Taster 4 auf, die entsprechend der Anordnung der verschweißten Profilstücke winklig orientiert sind, weil sich unterhalb der Taster 4 das Bearbeitungswerkzeug 3, zum Beispiel ein Spanmesser 33, anschließt. Das hier gezeigte zweite Spanmesser 39 ist insbesondere für die Bearbeitung in Richtung der Rahmenebene 13 vorgesehen.

Das senkrechte Teil 50 des Werkzeugträgers 5 trägt an seinem unterem Ende ebenfalls ein Bearbeitungswerkzeug, nämlich das erste Messer bzw. Spanmesser 38. Dessen bevorzugte Bearbeitungsrichtung ist vertikal nach oben, rechtwinklig zur Hauptbearbeitungsrichtung 13, auch rechtwinklig zur Rahmenebene. Dieses Messer 38 dient dazu zum Beispiel vertikal verlaufende Eckbereiche, insbesondere Inneneckbereiche, abzuarbeiten.

Über die Taster 4 wird nicht nur das zweite Messer 39, sondern auch das erste Messer 38 exakt positioniert. Im Rahmen der horizontalen Beweglichkeit (in Richtung des Doppelpfeils 52) positioniert sich der Taster 4 derart im Inneneck des Profiles, daß beide Taster 4 mit den Profilstücken in Verbindung stehen und an diesen anliegen. Die hieraus resultierende horizontale Bewegungskomponente in Richtung des Doppelpfeils 52 wirkt sowohl für das erste Messer 38 wie auch für das zweite Messer 39.

Es ist ein Vorteil der Erfindung, daß durch diese eine Abtastung zwei Messer, insbesondere für die Inneneckbearbeitung, positioniert werden.

Gleichzeitig vermag der Werkzeughalter 34 bei der Antastbewegung entsprechend des Doppelpfeils 35 zurückzuweichen, wobei dann gegebenenfalls auch Kontaktschalter vorgesehen sind, die der Steuerung mitteilen, daß der Halter in Position ist. Die Federlagerung des Werkzeughalters 34 bewirkt dabei, daß eine Bewegungskomponente in Richtung des Doppelpfeils 35 umgesetzt wird in eine Bewegungskomponente rechtwinklig dazu in Richtung des Doppelpfeils 52. So erfolgt ein exaktes Ausmitteln und auch Zentrieren des Bearbeitungswerkzeuges 3 an dem Halter 19.

In Fig. 5 ist ein vertikaler Schnitt durch die erfindungsgemäße Eckverputzvorrichtung gemäß Fig. 4 gezeigt. Der Halter 19 ist rohrartig ausgebildet und innen hohl. Dies ist günstig, da dadurch, ohne zusätzlichen kostbaren Bauraum zu vergeuden, eine Bremse 6 beziehungsweise der Bremsantrieb 60 für die Bremse 6 in Inneren des rohrartigen Halters 19 untergebracht werden kann.

Der hier gezeigte Bremsantrieb 60 ist als Pneumatikzylinderanordnung 61 ausgeführt. Eine Mehrzahl von kaskadisch hintereinander angeordneten Kolben vergrößern erheblich die wirksame Kolbenfläche, ohne dabei eine Aufweitung des Rohres zu bedingen. Der Druck P einer Druckluftversorgung wirkt dabei über einen mittig angeordneten Kanal und über in den Oberseiten der Kolben angeordneten Nuten auf die Kolbenfläche, wobei die Kolbenstange des oberen auf den Kolben des unteren Pneumatikzylinders aufsteht. Bei Druckbeaufschlagung wird somit eine erhebliche Kraft (bis zu 1000 Newton) bei entsprechender Dimensionierung und Anordnung der Kaskaden erreicht, bei entsprechend größerer Dimensionierung oder größerer Anzahl von Kaskaden wird eine noch größere Kraft erreichbar. Es resultiert eine Bewegung des Bremskolbens 62 vertikal nach unten entsprechend des Pfeiles 601. Der Bremskolben 62 ist dabei im unteren Bereich des Halters 19 angeordnet und schöpft seine Kraft zum einen durch eine eigene Druckbeaufschlagung mit der Druckluft P wie auch das gemeinsame Drücken der darüber angeordneten Kolben.

Der Bremskolben 62 taucht dabei ein in den Halteblock 18, zwischen den beiden Führungsstangen 15'.

Unterhalb des Bremskolbens 62 ist eine erste Bremsscheibe 63 angeordnet, die durch die Bewegung 601 des Bremskolbens 62 auf ein Widerlager 64 gepreßt wird. Hierdurch ist es möglich, die Bewegung 52 (senkrecht zur Blattebene) des Werkzeugträgers 5 gegenüber dem Halter 19 festzulegen.

Das Widerlager 64, welches mit der ersten Bremsscheibe 63 zusammenwirkt, ist dabei Teil der Bremseinheit 65, die sehr zentral in dem Werkzeugträger 5 eingebaut ist. Der Werkzeugträger 5 bildet dabei eine kreuzschlittenartige Führung 53, wodurch eine Bewegung der Bearbeitungswerkzeuge 3 in Blattebene (gemäß Doppelpfeil 35) wie auch rechtwinklig dazu, also rechtwinklig zur Blattebene (gemäß den Symbolen 52) möglich ist.

Die Bremseinheit 65 wirkt einerseits als Widerlager 64 für die erste Bremsscheibe, also zur Festlegung der Bewegung in Richtung der Pfeile 52, wie auch als zweite Bremsscheibe 66, um die Bewegung in Blattebene (Doppelpfeil 35) im Zusammenwirken mit dem zweiten Widerlager 67 festzulegen oder zu begrenzen.

Hierzu besitzt der Werkzeugträger 5 eine Führung, auf welcher der Werkzeughalter 34 entsprechend der Doppelpfeilorientierung 35 beweglich ist. Der mögliche Hub in Richtung des Doppelpfeils 35 ist die Spaltbreite 36, der Werkzeughalter 34 ist in dem hier gezeigten Beispiel ganz nach rechts versetzbar gestellt.

Dabei weist der Werkzeughalter 34 zwei Federaufnahmen 37, rückseitig in Richtung des senkrechten Teiles 50 auf, wodurch sich der Werkzeughalter 34 von dem Werkzeugträger 5 wegzudrücken vermag, wobei die Anordnung auch gegen diese Kraft zurückweichen kann.

Die zweite Bremsscheibe 66 hat einen größeren Druchmesser wie die Bremseinheit 65. An der Führung der Bremseinheit 65 in dem Werkzeugträger 5 ist dabei ein Anschlag 69 vorgesehen, der die Bewegung der Bremsscheibe 66 nach oben, aufgrund der Blattfeder 68 beschränkt. Die mittig angeordnete Schraube hält die Bremsscheibe 66 und die Bremseinheit 65 zusammen. Gegen die Kraft der Blattfeder 68 muß nun durch den Bremsantrieb 60 gedrückt werden, um auch die zweite Bewegung (in Richtung des Doppelpfeiles 35) zu eliminieren. Hierzu preßt dann die zweite Bremsscheibe 66 auf das Widerlager 67.

An dem Werkzeugträger 5 ist, in Fig. 5 rechts dargestellt, unterhalb des Halteblockes 18 eine Bohrung 600 mit Gewinde vorgesehen. Die Bremseinheit 65 besitzt eine Umfangsnut. Eine in die Bohrung 600 eingedrehte Schraube drückt in diese Umfangsnut und legt die Beweglichkeit der Bremseinheit derart fest, daß diese nicht mehr gegen die Kraft der Feder 68 die zweite Bremsscheibe 66 gegen das zweite Widerlager 67 pressen kann. Diese Festlegung kann manuell oder automatisch erfolgen.

Dadurch ist die Bremse für die Bewegungsrichtung, gemäß Doppelpfeil 35, ausschaltbar beziehungsweise deaktivierbar.

Ähnliches ist auch für die andere Bewegungsrichtung, gemäß dem Doppelpfeil 52, möglich. In der U-förmigen Aufnahme 51 (siehe Fig. 4) sind ca. mittig zwischen den beiden Führungsstangen 15' vorder- und rückseitig Feststellschrauben 59 vorgesehen. Durch diese Feststellschrauben 59 wird die Lage bezüglich des Doppelpfeiles 52 von dem Werkzeugträger 5 gegenüber dem Halter 19 festgelegt und eine Bremse wäre hier wirkungslos. Die Bremswirkung erfolgt dann nur auf die untere, zweite Bremse in Richtung des Doppelpfeiles 35.

Die Produktionsweise der in Fig. 4, 5 gezeigten erfindungsgemäßen Eckverputzvorrichtung ist wie folgt.

Nachdem das Rahmenteil 2, dessen Eckbereich zu verputzen ist, eingespannt ist, wird der Halter 19 beziehungsweise die Eckverputzvorrichtung 1 entsprechend positioniert. Dabei wird zunächst die Eckverputzvorrichtung 1 so weit abgesenkt, daß die Messer 3, 33 unterhalb des Rahmens 2 sind, so, daß die Taster 4, die etwas gegenüber den Messern zurückstehen, aber über diesen angeordnet sind, an den Profilstücken 21, 22 in Anlage kommen. Aufgrund der "schwimmenden" Lagerung, richtet sich die Anordnung von Taster 4 und Bearbeitungswerkzeug 3 gegen den Halter 19 aus und zentriert sich. Diese Lage wird dann durch die Bremse 6 festgelegt. Die Eckverputzvorrichtung 1 wird dann etwas zurückbewegt, damit das zweite Messer 39 freikommt. Unter Umständen wird zunächst der vertikale (Innen-) Bereich durch das erste Messer 38 bearbeitet. Danach wird dann für die im Wesentlichen horizontale bzw. schräge Bearbeitung das zweite Messer 39 eingesetzt, wobei die Führung dieses Messers maschinengesteuert, zum Beispiel NC-gesteuert erfolgt, wobei die entsprechenden Konturdaten aus dem Speicher entnommen werden und die Steuerung das Messer entsprechend den vorgegebenen Werten steuert und bewegt.

Insbesondere ist die Erfindung geeignet bei Profilen eingesetzt zu werden, die inliegende Rundungen aufweisen, wobei diese Rundungen auch in Rahmenebene (also parallel zur Bewegungsrichtung 13) orientiert sind. Die Erfindung ist insbesondere auch dafür einsetzbar, an Rahmen mit Überschlägen eingesetzt zu werden.

## Patentansprüche

1. Eckverputzvorrichtung für die Bearbeitung der Verbindung von aus Profilstücken geschweißten Rahmen beziehungsweise Rahmenteilen insbesondere für Fenster- oder Türrahmen, wobei die Eckverputzvorrichtung zumindest in Richtung senkrecht zu der von den Profilstücken definierten Rahmenebene sowie entlang dem Verbindungsbereich bewegbar ist, an einem Halter zwischen zwei Tastern ein Bearbeitungswerkzeug angeordnet ist und die beiden Taster zumindest zeitweise je an einem Profilstück anliegen, wobei zumindest zeitweise der Taster (4) bezüglich dem Halter beweglich ist, **dadurch gekennzeichnet, daß** die Taster (4) auf einer Führungsstange (15) beweglich geführt und in einer Tasterlagerung (14) gelagert sind, seitlich neben dem Bearbeitungswerkzeug (3) Gleitflächen (31) vorgesehen, die Gleitflächen (31) bezüglich der Schneide (30) zurückgesetzt und durch eine gebrochene Kante oder eine Fase angegeben sind.

2. Eckverputzvorrichtung nach Anspruch 1, **dadurch gekennzeichnet, daß** das Bearbeitungswerkzeug (3) bezüglich dem Taster (4) beweglich ist.

3. Eckverputzvorrichtung nach einem der vorhergehenden Ansprüche, **dadurch gekennzeichnet, daß** der Taster (4) und das Bearbeitungswerkzeug (3) eine Bewegungseinheit bilden und gemeinsam bezüglich dem Halter (19) beweglich sind.

4. Eckverputzvorrichtung nach einem der vorhergehenden Ansprüche, **dadurch gekennzeichnet, daß** das Bearbeitungswerkzeug (3) als Spanmesser (33) ausgebildet ist.

5. Eckverputzvorrichtung nach einem der vorhergehenden Ansprüche, **dadurch gekennzeichnet, daß** das Spanmesser (33) V-förmig ausgebildet ist und/oder das Spanmesser (33) gegenüber der jeweiligen Bewegungsrichtung der Eckverputzvorrichtung (10, 13) abklapp-, verstell- beziehungsweise abwinkelbar gelagert beziehungsweise ausgebildet ist.

6. Eckverputzvorrichtung nach einem der vorhergehenden Ansprüche, **dadurch gekennzeichnet, daß** das Spanmesser (33) mit einer geraden Schneide (30) versehen ist oder das Spanmesser (3) eine zurückspringende Schneide (30) aufweist oder die Schneide (30) des Spanmessers (3) bezüglich der Verlängerung der am Rahmen anliegenden Tastkante (43, 43') des Tasters (4) vorsteht.

7. Eckverputzvorrichtung nach einem der vorhergehenden Ansprüche, **dadurch gekennzeichnet, daß** der Taster (4) federgelagert ist.

8. Eckverputzvorrichtung nach einem der vorhergehenden Ansprüche, **dadurch gekennzeichnet, daß** der Taster (4) Tastflächen (41, 42) aufweist, die an dem Rahmen bzw. an die Profilstücke (21, 22) anlegbar sind.

9. Eckverputzvorrichtung nach einem der vorhergehenden Ansprüche, **dadurch gekennzeichnet, daß** das untere Ende (44) des Tasters (4) in Gebrauchsstellung unterhalb der Messerschneide (33), insbesondere deutlich unterhalb der Messerschneide (33) angeordnet ist.

10. Eckverputzvorrichtung nach einem der vorhergehenden Ansprüche, **dadurch gekennzeichnet, daß** die Höhe des Tasters (4) so gewählt ist, daß sie mindestens der relativen Dicke des Profiles bzw. dem vertikalen Abstand zwischen dem niedrigsten und dem höchsten Punkt des Spanmessers (3) für die Bearbeitung entspricht.

11. Eckverputzvorrichtung nach einem der vorhergehenden Ansprüche, **dadurch gekennzeichnet, daß** der Taster (4) entlang der Führung (15) entsprechend der Länge der zu bearbeitenden Gehrungsfläche (20) beweglich geführt bzw. gelagert ist.

12. Eckverputzvorrichtung nach einem der vorhergehenden Ansprüche, **dadurch gekennzeichnet, daß** die Tastflächen (41, 42) winklig, vorzugsweise rechtwinklig oder entsprechend des Winkels der geschweißten Profilstücke (21, 22) zueinander orientiert angeordnet bzw. anordenbar sind oder auf der Tasterlagerung (14) eine Feder (40) angeordnet ist, deren Federkraft den Taster (4) gegen das Profil bzw. die Profilstücke (21, 22) drückt.

13. Eckverputzvorrichtung nach einem der vorhergehenden Ansprüche, **dadurch gekennzeichnet, daß** die Feder (40) auf der Führung (15) angeordnet ist oder die Feder (40) eine eigene Federführung aufweist.

14. Eckverputzvorrichtung nach einem der vorhergehenden Ansprüche, **dadurch gekennzeichnet, daß** das Bearbeitungswerkzeug (3) relativ zur Eckverputzvorrichtung bewegbar ausgebildet ist oder das Bearbeitungswerkzeug (3) auf einem Werkzeugträger (5) in einer Bewegungsrichtung parallel (35, 52) zur Rahmenebene, bevorzugt rechtwinklig (52) zum Verbindungsbereich, bewegbar gelagert ist.

15. Eckverputzvorrichtung nach einem der vorhergehenden Ansprüche, **dadurch gekennzeichnet, daß** eine Bremse (6) vorgesehen ist zur Reduzierung oder Festlegung der Beweglichkeit von Taster (4) und/oder Bearbeitungswerkzeug (3) bezüglich dem Halter (19).

16. Eckverputzvorrichtung nach einem der vorhergehenden Ansprüche, **dadurch gekennzeichnet, daß** das Bearbeitungswerkzeug (3) auf einer kreuzschlittenartigen (53) Führung in einer Ebene, bevorzugt parallel zur Rahmenebene, entlang zweier Bewegungsrichtungen (35, 52) bewegbar gelagert ist oder das Bearbeitungswerkzeug (3) unterhalb des Tasters (4) angeordnet ist.

17. Eckverputzvorrichtung nach einem der vorhergehenden Ansprüche, **dadurch gekennzeichnet, daß** die Bremse (6) auf mindestens eine der Bewegungen (35, 52) des Bearbeitungswerkzeuges (3) in der kreuzschlittenartigen Führung (53) wirkt.

18. Eckverputzvorrichtung nach einem der vorhergehenden Ansprüche, **dadurch gekennzeichnet, daß** die Bremse (6) je eine Bremsscheibe (63, 66) für jede Bewegungsrichtung aufweist oder ein Bremsantrieb (60) für beide Bremsscheiben (63, 66) vorgesehen ist.

19. Eckverputzvorrichtung nach einem der vorhergehenden Ansprüche, **dadurch gekennzeichnet, daß** der Bremsantrieb (60) über die erste Bremsscheibe (63) auf die zweite Bremsscheibe (66) wirkt oder die Bremse (6) bzw. der Bremsantrieb (60) im Halter (19) vorgesehen ist.

20. Eckverputzvorrichtung nach einem der vorhergehenden Ansprüche, **dadurch gekennzeichnet, daß** als Bremsantrieb (60) ein Pneumatikzylinder, insbesondere eine kaskadische Pneumatikzylinderanordnung (61) vorgesehen ist.

21. Eckverputzvorrichtung nach einem der vorhergehenden Ansprüche, **dadurch gekennzeichnet, daß** die Bremse (6) für die eine oder andere Bewegungsrichtung aktivierbar bzw. deaktivierbar ist.

22. Eckverputzvorrichtung nach einem der vorhergehenden Ansprüche, **dadurch gekennzeichnet, daß** die Bremse (6) eine Bremseinheit (65) aufweist, die in der kreuzschlittenartigen (53) Führung angeordnet ist und die einerseits der ersten Bremsscheibe (63) als Widerlager (64) dient und andererseits die zweite Bremsscheibe (66) bildet oder trägt.

23. Eckverputzvorrichtung nach einem der vorhergehenden Ansprüche, **dadurch gekennzeichnet, daß** der Werkzeugträger (5) Teil der Kreuzschlittenführung (53) ist.

24. Eckverputzvorrichtung nach einem der vorhergehenden Ansprüche, **dadurch gekennzeichnet, daß** die Eckverputzvorrichtung (1) bzw. der Halter (19) durch eine NC-Steuerung dem Profilverlauf entsprechend zur Verarbeitung über den Verbindungsbereich (20) geführt wird.

25. Eckverputzvorrichtung nach einem der vorhergehenden Ansprüche, **dadurch gekennzeichnet, daß** die Eckverputzvorrichtung (1) zwei Bearbeitungswerkzeuge (3, 38, 39) aufweist, wobei ein erstes Bearbeitungswerkzeug (38) vom Werkzeugträger (5) gehalten ist und ein zweites Bearbeitungswerkzeug (39) von der kreuzschlittenartigen Führung (53) gehalten ist.

26. Eckverputzvorrichtung nach einem der vorhergehenden Ansprüche, **dadurch gekennzeichnet, daß** vor der Bearbeitung die Bremsen (6) geöffnet sind für eine Ausrichtung von Taster (4) bzw. Bearbeitungswerkzeug (3) bezüglich Halter (19) und während der Bearbeitung die Bremse (6) festgelegt ist.

27. Verfahren zur Bearbeitung, insbesondere Verputzen der Verbindung von aus Profilstücken gebildeten Rahmen bzw. Rahmenteilen, wie für Fenster- oder Türrahmen, mit einer Eckverputzvorrichtung nach einem der vorhergehenden Ansprüche, bei dem ein Bearbeitungswerkzeug zwischen zwei Tastern durch einen Halter im Verbindungsbereich bewegt wird, wobei vor der Bearbeitung der Taster bezüglich des Halters derart beweglich ist, daß durch Anlage der Taster an den Profilstücken der Taster bezüglich des Halters ausgerichtet wird und nach dem Ausrichten die Bearbeitung erfolgt, **dadurch gekennzeichnet, daß**, nachdem der Taster bezüglich dem Halter ausgerichtet ist, die Lage zwischen Taster und Halter durch eine Bremse festgelegt wird.

28. Verfahren nach Anspruch 27, **dadurch gekennzeichnet, daß** während der Bearbeitung die Taster nicht an den Profilstücken anliegen oder während der Bearbeitung die Eckverputzvorrichtung bzw. der Halter durch eine NC-Steuerung, dem Profilverlauf im Verbindungsbereich folgend, geführt wird.

## Claims

1. Corner trimming device for the machining of the connection of frames or frame parts welded of profile parts, in particular for window or door frames, the corner trimming device being movable at least in the direction vertically to the frame plane defined by the profile parts as well as along the connection area, a machining tool being arranged on a holding device between two tracers, and the two tracers sitting close at least at times each to a profile part, at least at times the tracer (4) being movable with reference to the holding device, **characterised in that** the tracers (4) are guided movable on a guide rail (15) and supported in a tracer support (14), on the side beside the machining tool (3) sliding surfaces (31) are provided, the sliding surfaces (31) are set back with reference to the cutting edge (30) and given by a cut-off edge or a bevel.

2. Corner trimming device according to claim 1, **characterised in that** the machining tool (3) is movable with reference to the tracer (4).

3. Corner trimming device according to one of the preceding claims, **characterised in that** the tracer (4) and the machining tool (3) form a motion unit and are movable together with reference to the holding device (19).

4. Corner trimming device according to one of the preceding claims, **characterised in that** the machining tool (3) is designed as chip knife (33).

5. Corner trimming device according to one of the preceding claims, **characterised in that** the chip knife (33) is designed V-shaped, and/or the chip knife (33) is supported or designed towards the respective movement direction of the corner trimming device (10, 13) in such a way that it can be folded out, adjusted or angled.

6. Corner trimming device according to one of the preceding claims, **characterised in that** the chip knife (33) is provided with a straight cutting edge (30), or the chip knife (3) has a receding cutting edge (30), or the cutting edge (30) of the chip knife (3) projects with reference to the elongation of the tracing edge (43, 43') of the tracers (4) sitting close to the frame.

7. Corner trimming device according to one of the preceding claims, **characterised in that** the tracer (4) is supported by springs.

8. Corner trimming device according to one of the preceding claims, **characterised in that** the tracer (4) has tracing surfaces (41, 42) which can be brought to sit close to the frame or the profile parts (21, 22).

9. Corner trimming device according to one of the preceding claims, **characterised in that** the bottom end (44) of the tracer (4) is arranged in the position of use below the cutting edge (33) of the knife, in particular clearly below the cutting edge (33) of the knife.

10. Corner trimming device according to one of the preceding claims, **characterised in that** the height of the tracer (4) is chosen in such a way that it corresponds at least the relative thickness of the profile or the vertical distance between the lowest and highest point of the chip knife (3) for machining.

11. Corner trimming device according to one of the preceding claims, **characterised in that** the tracer (4) is guided movable or supported along the guide (15) according to the length of the mitred surface (20) which has to be machined.

12. Corner trimming device according to one of the preceding claims, **characterised in that** the tracing surfaces (41, 42) are or can be orientated to each other arranged angled, preferably rectangular or according to the angle of the welded profile parts (21, 22), or on the tracer support (14) a spring (40) is arranged the spring force of which presses the tracer (4) against the profile or the profile parts (21, 22).

13. Corner trimming device according to one of the preceding claims, **characterised in that** the spring (40) is arranged on the guide (15), or the spring (40) has its own spring guide.

14. Corner trimming device according to one of the preceding claims, **characterised in that** the machining tool (3) is designed movable relatively to the corner trimming device, or the machining tool (3) is supported movable on a tool carrier (5) in a direction of movement parallel (35, 52) to the plane of the frame, preferably rectangular (52) to the connection area.

15. Corner trimming device according to one of the preceding claims, **characterised in that** a brake (6) is provided for reducing or defining the mobility of tracer (4) and/or machining tool (3) with reference to the holding device (19).

16. Corner trimming device according to one of the preceding claims, **characterised in that** the machining tool (3) is supported movable on a compound slide rest-like (53) guide in a plane, preferably parallel to the plane of the frame, along two directions of movement (35, 52), or the machining tool (3) is arranged below the tracer (4).

17. Corner trimming device according to one of the preceding claims, **characterised in that** the brake (6) acts on at least one of the movements (35, 52) of the machining tool (3) in the compound slide rest-like guide (53).

18. Corner trimming device according to one of the preceding claims, **characterised in that** the brake (6) has one brake disc (63, 66) each for each direction of movement, or one brake drive (60) is provided for both brake discs (63, 66).

19. Corner trimming device according to one of the preceding claims, **characterised in that** the brake drive (60) acts via the first brake disc (63) on the second brake disc (66), or the brake (6) or the brake drive (60) is provided in the holding device (19).

20. Corner trimming device according to one of the preceding claims, **characterised in that** as brake drive (60) a pneumatic cylinder, in particular a cascade pneumatic cylinder arrangement (61) is provided.

21. Corner trimming device according to one of the preceding claims, **characterised in that** the brake (6) can be activated or deactivated for one or the other direction of movement.

22. Corner trimming device according to one of the preceding claims, **characterised in that** the brake (6) has a braking unit (65) arranged in the compound slide rest-like (53) guide, and which, on the one hand, serves as abutment (64) for the first brake disc (63), and, on the other hand, forms the second brake disc (66) or carries it.

23. Corner trimming device according to one of the preceding claims, **characterised in that** the tool carrier (5) is part of the compound slide rest (53).

24. Corner trimming device according to one of the preceding claims, **characterised in that** the corner trimming device (1) or the holding device (19) are guided by a NC control according to the course of the profile for machining across the corner area (20).

25. Corner trimming device according to one of the preceding claims, **characterised in that** the corner trimming device (1) has two machining tools (3, 38, 39), a first machining tool (38) being held by the tool carrier (5) and a second machining tool (39) being held by the compound slide rest-like guide (53).

26. Corner trimming device according to one of the preceding claims, **characterised in that** before the machining the brakes (6) are opened for an alignment of tracer (4) or machining tool (3) with reference to holding device (19), and during the machining the brake (6) is fixed.

27. Method for machining, in particular trimming, the connection of frames or frame parts formed by profile parts, as for window or door frames, with a corner trimming device according to one of the preceding claims, where a machining tool is moved between two tracers by a holding device in the connection area, before the machining the tracer being movable with reference of the holding device in such a way that by sitting-close of the tracer to the profile parts the tracer is aligned with reference to the holding device, and, after alignment, the machining is carried out, **characterised in that**, after the tracer is aligned with reference to the holding device, the position between the tracer and the holding device is fixed by a brake.

28. Method according to claim 27, **characterised in that** during the machining the tracers do not sit close to the profile parts, or during the machining the corner trimming device or the holding device is guided by a NC control following the course of the profile in the connection area.

## Revendications

1. Dispositif d'usinage d'angles destiné à l'usinage des angles soudés des profilés en plastique formant des cadres ou des parties de cadres, en particulier des cadres de fenêtres ou de portes, le dispositif étant mobile au moins dans la direction perpendiculaire au plan défini par les profilés, ainsi que le long de la soudure et comportant un outil d'usinage fixé sur un support situé entre deux capteurs, dont chacun s'applique au moins pendant un moment contre un profilé différent, le capteur (4) pouvant être déplacé au moins pendant un moment par rapport au support, **caractérisé en ce que** les capteurs (4) peuvent être déplacés le long d'une tige de guidage (15) dans une gorge (14) et **en ce que** des surfaces inclinées (31) sont situées en retrait du fil coupant (30), à côté de l'outil d'usinage (3) et comportent des bords coupés.

2. Dispositif d'usinage d'angles selon la revendication 1,
**caractérisé en que** l'outil d'usinage (3) est mobile par rapport au capteur (4).

3. Dispositif d'usinage d'angles selon une ou les deux revendications précédentes, **caractérisé en ce que** le capteur (4) et l'outil d'usinage (3) forment un ensemble mobile, qui peut être déplacé par rapport au support (19).

4. Dispositif d'usinage d'angles selon une des revendications précédentes, **caractérisé en ce que** l'outil d'usinage (3) est une lame coupante (33).

5. Dispositif d'usinage d'angles selon une des revendications précédentes, **caractérisé en ce que** la lame coupante (33) possède une forme de V et/ou **en ce que** la lame coupante (33) peut être rétractée, repliée ou reculée par rapport aux directions de déplacement (10, 13) du dispositif d'usinage.

6. Dispositif d'usinage d'angles selon une des revendications précédentes, **caractérisé en ce que** la lame coupante (33) possède un fil coupant rectiligne (30) ou en ce que l'outil d'usinage (3) possède un fil coupant (30) en retrait ou **en ce que** la lame coupante (30) de l'outil d'usinage (3) dépasse des bords (43, 43') du capteur (4).

7. Dispositif d'usinage d'angles selon une des revendications précédentes, **caractérisé en ce que** le capteur (4) est maintenu par un ressort.

8. Dispositif d'usinage d'angles selon une des revendications précédentes, **caractérisé en ce que** le capteur (4) possède des surfaces (41, 42) qui peuvent venir au contact du cadre ou des profilés (21, 22).

9. Dispositif d'usinage d'angles selon une des revendications précédentes, **caractérisé en ce que** l'extrémité inférieure (44) du capteur (4) en position d'utilisation est située en dessous de la lame coupante (33) et en particulier considérablement en dessous de celle-ci.

10. Dispositif d'usinage d'angles selon une des revendications précédentes, **caractérisé en ce que** la hauteur du capteur (4) correspond au moins à l'épaisseur du profilé ou à la distance verticale entre les points extrêmes inférieur et supérieur du déplacement de la lame coupante (3) lors de l'usinage.

11. Dispositif d'usinage d'angles selon une des revendications précédentes, **caractérisé en ce que** le capteur (4) est fixé de façon mobile le long d'un guidage (15) dont la longueur correspond à la distance de déplacement nécessaire pour l'usinage de la soudure (20) de l'angle du cadre.

12. Dispositif d'usinage d'angles selon une des revendications précédentes, **caractérisé en ce que** les surfaces (41, 42) du capteur sont ou peuvent être positionnées de façon à former un angle, en particulier un angle droit ou un angle correspondant à l'angle formé par les profilés soudés (21, 22) ou **en ce qu'**il existe un ressort (40) au niveau du guidage (14) du capteur dont la force pousse ce capteur (4) contre le ou les profilés (21, 22).

13. Dispositif d'usinage d'angles selon une des revendications précédentes, **caractérisé en ce que** le ressort (40) est situé au niveau du guidage (15) ou **en ce que** le ressort (40) comporte son propre élément de guidage.

14. Dispositif d'usinage d'angles selon une des revendications précédentes, **caractérisé en ce que** l'outil d'usinage (3) peut être déplacé par rapport au dispositif d'usinage ou **en ce que** l'outil d'usinage (3) est situé sur un porte-outil (5) mobile dans une direction (35, 52) parallèle au plan du cadre et également mobile dans une direction (52) de préférence perpendiculaire à la zone de soudure.

15. Dispositif d'usinage d'angles selon une des revendications précédentes, **caractérisé en ce qu'**un frein (6) existe afin de réduire voire de bloquer la mobilité du capteur (4) et/ou de l'outil d'usinage (3) par rapport au support (19).

16. Dispositif d'usinage d'angles selon une des revendications précédentes, **caractérisé en ce que** l'outil d'usinage (3) est fixé sur un coulisseau (53) avançant dans deux directions (35, 52) formant un plan de préférence parallèle au plan du cadre ou **en ce que** l'outil d'usinage (3) est situé en dessous du capteur (4).

17. Dispositif d'usinage d'angles selon une des revendications précédentes, **caractérisé en ce que** le frein (6) agit sur le mouvement de déplacement de l'outil d'usinage (3) dans le système de guidage (53) dans au moins une des directions (35, 52).

18. Dispositif d'usinage d'angles selon une des revendications précédentes, **caractérisé en ce que** le frein (6) possède un disque de freinage (63, 66) pour chacune des directions de déplacement ou **en ce qu'**il existe une commande (60) pour les deux disques de freinage (63, 66).

19. Dispositif d'usinage d'angles selon une des revendications précédentes, **caractérisé en ce que** la commande de frein (60) agit via le premier disque de frein (63) sur le deuxième disque de frein (66) ou **en ce que** le frein (6) ou la commande (60) est situé(e) au niveau du support (19).

20. Dispositif d'usinage d'angles selon une des revendications précédentes, **caractérisé en ce que** la commande de frein (60) est un cylindre pneumatique et en particulier un ensemble de cylindres pneumatiques montés en cascade (61).

21. Dispositif d'usinage d'angles selon une des revendications précédentes, **caractérisé en ce que** le frein (6) peut être activé ou désactivé pour l'une ou l'autre direction de déplacement.

22. Dispositif d'usinage d'angles selon une des revendications précédentes, **caractérisé en ce que** le frein (6) comporte une unité de freinage (65) située dans le guidage (53) et formant une butée (64) pour le premier disque de frein (63) et formant ou maintenant le deuxième disque de frein (66).

23. Dispositif d'usinage d'angles selon une des revendications précédentes, **caractérisé en ce que** le porte-outil (5) fait partie du guidage (53).

24. Dispositif d'usinage d'angles selon une des revendications précédentes, **caractérisé en ce que** le dispositif d'usinage d'angles (1) ou le support (19) est déplacé au-dessus de la zone de soudure (20) en fonction du profilé et à l'aide d'un système de contrôle numérique afin de réaliser l'usinage.

25. Dispositif d'usinage d'angles selon une des revendications précédentes, **caractérisé en ce que** le dispositif d'usinage (1) comporte deux outils d'usinage (3, 38, 39), un premier outil d'usinage (38) étant maintenu par le porte-outil (5) et un deuxième outil d'usinage (39) étant maintenu par le guidage (53).

26. Dispositif d'usinage d'angles selon une des revendications précédentes, **caractérisé en ce que** les freins (6) sont desserrés avant l'usinage pour permettre l'ajustement du capteur (4) et de l'outil d'usinage (3) par rapport au support (19) puis serrés pendant l'usinage.

27. Procédé d'usinage, et en particulier d'usinage d'interconnexions de profilés formant un cadre ou des parties de cadre destiné(es) en particulier aux fenêtres ou aux portes, utilisant un dispositif d'usinage d'angles selon une des revendications précédentes, comportant un outil d'usinage qui peut être déplacé entre deux capteurs dans la zone de soudure à l'aide d'un support alors que préalablement à l'usinage un des capteurs mobile par rapport au support ajuste sa position en venant en contact avec le profilé puis commence l'usinage, **caractérisé en ce** q'un frein immobilise le capteur par rapport au support dès que la position du capteur est ajustée.

28. Procédé selon la revendication 27, **caractérisé en ce que** les capteurs ne touchent pas les profilés pendant l'usinage ou **en ce que** le dispositif d'usinage ou le support est guidé par un système de contrôle numérique permettant de suivre la zone d'interconnexion des profilés pendant l'usinage.
